# EUROPEAN PATENT APPLICATION

(11) **EP 2 908 511 A1**
(43) Date of publication of application: **19.08.2015**
(21) Application number: 15153631.5
(22) Date of filing: 03.02.2015
(51) Int. Cl.: H04M 1/725, G06F 3/0346, G06F 3/01

(54) **Methods and systems for voice management**

(30) Priority: 17.02.2014 TW 103105042
(71) Applicant: Hooloop Corporation, Taipei City 115 (TW)
(72) Inventor: Wang, John C., 115 Taipei City (TW); Wang, Yung-Hsing, 115 Taipei City (TW)
(74) Representative: Karakatsanis, Georgios

(57) **Abstract**

Methods and systems (100) for voice management are provided. First, data is detected by a proximity sensor (110), and data is detected by an attitude sensor (120). When data detected by the proximity sensor (110) indicates that a presence of an object is detected, and data detected by the attitude sensor (120) indicates a specific attitude, a voice management process, such as a voice playback process or a voice recording process is performed.

## Description

### BACKGROUND

### Technical Field

The disclosure relates generally to methods and systems for voice management, and, more particularly to methods that can automatically perform voice management processes, such as voice playback process and/or voice recording process according to data detected by sensors.

### Description of the Related Art

Recently, portable devices, such as smart phones or notebooks, have become more and more technically advanced and multifunctional. For example, a portable device may have network connecting capabilities. Users can use their portable devices to connect to networks anytime and anywhere, browse the Internet, and perform related applications and services via the networks. Due to increased convenience and expanded functionalities of the devices, these devices have become necessities of life.

As a result of the popularity of applications for network communication in smartphones, communicating with friends online via smartphone applications has become a prevalent interaction method. Generally, users can input a text message or record a voice, and send the text message or the voice message to a specific friend or members of a group. The specific friend or the group members can read the text message or the voice message, immediately or at their leisure.

Conventionally, users must manually operate related application interfaces and select related functions to perform voice management processes, such as the voice recording process and the voice playback process. For typical users, the above operation is inconvenient and inefficient. When the operation for voice management needs to be frequently performed, the inconvenience and complicated nature of the operation becomes burdensome for the user and results in wasted system resources of electronic devices.

### SUMMARY

Methods and systems for voice management are provided, wherein electronic devices can automatically perform voice management processes, such as voice playback process and/or voice recording process according to data detected by sensors.

In an embodiment of a method for voice management, data is detected by a proximity sensor, and data is detected by an attitude sensor. When data detected by the proximity sensor indicates that a presence of an object is detected, and data detected by the attitude sensor indicates that an electronic device generates a specific motion or the electronic device is in a specific attitude, a voice management process is performed, wherein the voice management process comprises a voice playback process or a voice recording process.

An embodiment of a system for voice management at least comprises a proximity sensor, an attitude sensor, and a processing unit. The processing unit performs a voice management process when data detected by the proximity sensor indicates that a presence of an object is detected, and data detected by the attitude sensor indicates that an electronic device generates a specific motion or the electronic device is in a specific attitude, wherein the voice management process comprises a voice playback process or a voice recording process.

In an embodiment of a method for voice management, data is detected by a proximity sensor, and data is detected by an attitude sensor. When data detected by the proximity sensor indicates that a presence of an object is detected, and data detected by the attitude sensor indicates that an electronic device generates a specific motion or the electronic device is in a specific attitude, a voice playback process is performed.

An embodiment of a system for voice management at least comprises a proximity sensor, an attitude sensor, and a processing unit. The processing unit performs a voice playback process when data detected by the proximity sensor indicates that a presence of an object is detected, and data detected by the attitude sensor indicates that an electronic device generates a specific motion or the electronic device is in a specific attitude.

In an embodiment of a method for voice management, data is detected by a proximity sensor, and data is detected by an attitude sensor. When data detected by the proximity sensor indicates that a presence of an object is detected, and data detected by the attitude sensor indicates that an electronic device generates a specific motion or the electronic device is in a specific attitude, a voice recording process is performed.

An embodiment of a system for voice management at least comprises a proximity sensor, an attitude sensor, and a processing unit. The processing unit performs a voice recording process when data detected by the proximity sensor indicates that a presence of an object is detected, and data detected by the attitude sensor indicates that an electronic device generates a specific motion or the electronic device is in a specific attitude.

In some embodiments, at least one voice message which has not been played yet in the electronic device is played in the voice playback process.

In some embodiments, the voice playback process is performed first, and after the voice playback process is completed, the voice recording process is performed.

In some embodiments, before the voice recording process is performed, a prompt message is generated. In some embodiments, the prompt message comprises a display, a sound, and/or a vibration.

In some embodiments, it is determined whether a sound is received by a sound reception unit during the voice playback process. When a sound is received by the sound reception unit, the voice playback process is terminated, and the voice recording process is performed.

In some embodiments, when the data detected by the proximity sensor indicates no object is present, the voice playback process is terminated.

The methods and systems for voice management can automatically perform voice processes, such as voice playback process and/or voice recording process according to data detected by sensors, thereby increasing efficiency of voice management.

Methods and systems for voice management may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a system for voice management of the invention;
Fig. 2 is a flowchart of an embodiment of a method for voice management of the invention;
Fig. 3 is a flowchart of another embodiment of a method for voice management of the invention;
Fig. 4 is a flowchart of another embodiment of a method for voice management of the invention;
Fig. 5 is a flowchart of another embodiment of a method for voice management of the invention; and
Fig. 6 is a flowchart of another embodiment of a method for voice management of the invention.

### DETAILED DESCRIPTION OF THE INVENTION

Methods and systems for voice management are provided.

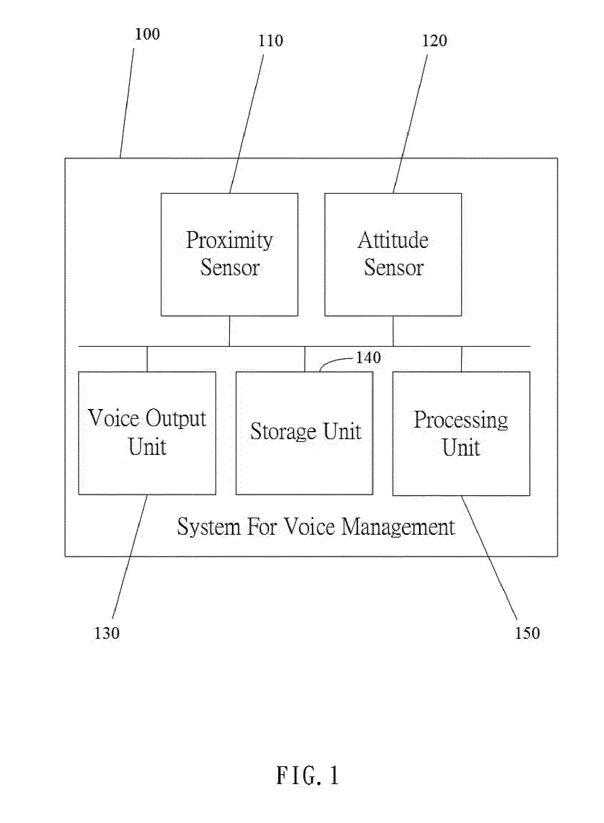

Fig. 1 is a schematic diagram illustrating an embodiment of a system for voice management of the invention. As shown in Fig. 1, the system for voice management 100 can be used in an electronic device. In some embodiments, the electronic device may be any electronic device having network connecting capabilities, such as a computer, or a mobile device, such as a mobile phone, a smart phone, a PDA (Personal Digital Assistant), a GPS (Global Positioning System), or a notebook. The system for voice management 100 can comprise a proximity sensor 110, an attitude sensor 120, a voice output unit 130 such as an earphone or a speaker, a storage unit 140, and a processing unit 150. It is understood that, in some embodiments, the system for voice management 100 can comprise a voice reception unit (not shown in Fig. 1) such as a microphone, for receiving sounds. Additionally, in some embodiments, the system for voice management 100 can comprise a network connecting unit (not shown in Fig. 1), for connecting to a network, such as a wired network, a telecommunication network, and/or a wireless network. The electronic device can have network connecting capabilities by using the network connecting unit.

In some embodiments, the proximity sensor 110 can be set at a position nearby the voice output unit 130 to detect a presence of an object. That is the proximity sensor 110 can determine whether an object approaches the electronic device. The attitude sensor 120 may be an accelerometer, a Gyro sensor, and/or any sensor, which can detect an attitude, such as altitude and angle of the electronic device. The storage unit 140 can store related data, such as voice messages recorded by the electronic device and voice messages received from a server. The processing unit 150 can control related operations of hardware and software in the electronic device, and perform the methods for voice managements of the present invention. It is understood that, in some embodiments, the system for voice management 100 can comprise a display unit (not shown in Fig. 1), which can display related information, such as images, interfaces, and/or data.

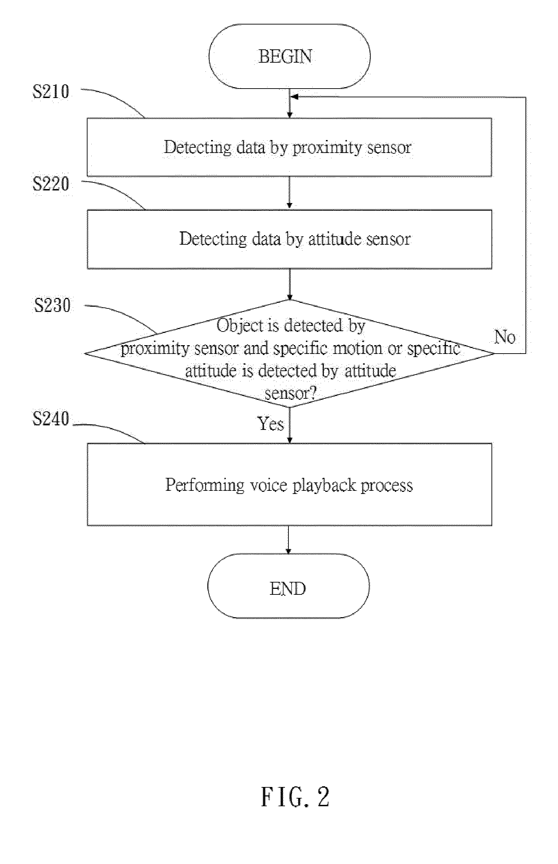

Fig. 2 is a flowchart of an embodiment of a method for voice management of the invention. The method for voice management can be used in an electronic device, such as a computer, or a mobile device, such as a mobile phone, a smartphone, a PDA, a GPS, or a notebook.

In step S210, data is detected by a proximity sensor, and in step S220, data is detected by an attitude sensor. In some embodiments, the proximity sensor can be set at a position nearby a voice output unit of the electronic device to detect a presence of an object. In some embodiments, the attitude sensor may be an accelerometer, a Gyro sensor, and/or any motion sensor, which can detect an attitude, such as altitude and angle of the electronic device. Then, in step S230, it is determined whether an object is detected by the proximity sensor and an attitude detected by the attitude sensor indicates that the electronic device generates a specific motion or the electronic device is in a specific attitude, such as a pose indicating a user substantially putting the electronic device nearby the ear at a specific time point, such as the time point at which the motion is terminated, according to the data detected by the proximity sensor and the data detected by the attitude sensor. It is noted that, in some embodiments, data corresponding to the electronic device, such as a variation of a velocity, a displacement, and/or an angular acceleration detected by the attitude sensor in a predefined interval is received. In some embodiments, it is determined whether the data variation in the predefined interval conforms to a predefined pattern corresponding to the specific motion. When the data variation in the predefined interval conforms to the predefined pattern, it is determined that the electronic device generates the specific motion. If no object is detected by the proximity sensor or the attitude detected by the attitude sensor does not indicate that the electronic device generates a specific motion or the electronic device is in a specific attitude (No in step S230), the procedure returns to step S210. If an object is detected by the proximity sensor and the attitude detected by the attitude sensor does indicate that the electronic device generates a specific motion or the electronic device is in a specific attitude (Yes in step S230), in step S240, a voice playback process is performed.

It is understood that, in some embodiments, a group with at least one member can communicate with each other via voice messages. The electronic device of each member can receive voice messages generated by the electronic devices of other members. In some embodiments, the voice message generated by an electronic device of a member can be transmitted to a server via a network, and the server can transmit the voice message to the respective electronic devices of other members. In some embodiments, it is determined whether the electronic device has at least one voice message which has not been played yet in the group before step S240. If the electronic device has at least one voice message which has not been played yet in the group, the voice message playback process in step S240 is performed. It is understood that, in some embodiments, the at least one voice message which has not been played yet in the electronic device is played according to a time sequence, at which the voice message is generated or received, in the voice playback process. In some embodiments, when a voice message which has been played exists between two voice messages which has not been played yet, the voice message which has been played will be played again. It is understood that, in some embodiments, when no object is detected by the proximity sensor during the voice playback process, the voice playback process is terminated.

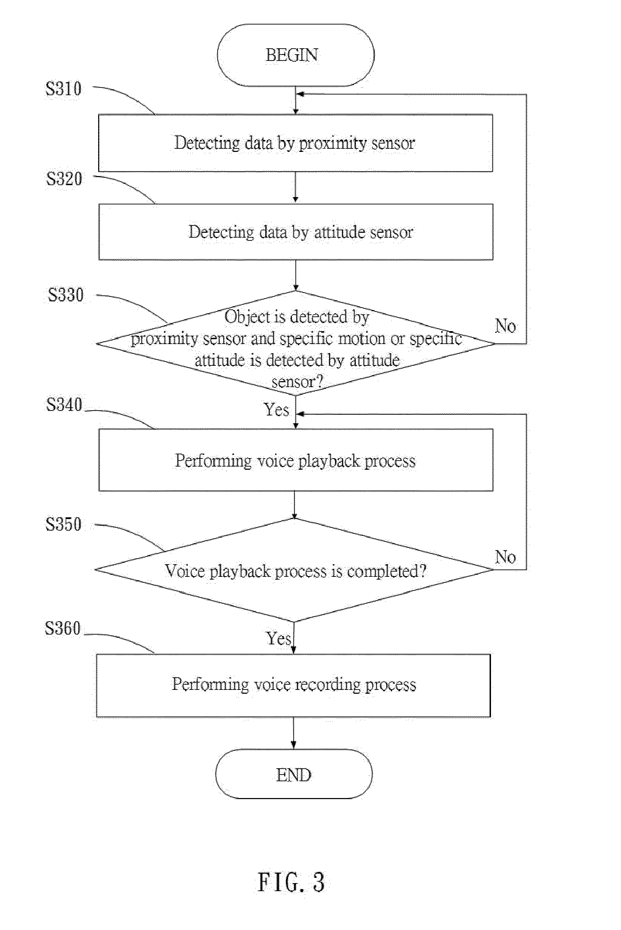

Fig. 3 is a flowchart of another embodiment of a method for voice management of the invention. The method for voice management can be used in an electronic device, such as a computer, or a mobile device, such as a mobile phone, a smartphone, a PDA, a GPS, or a notebook.

In step S310, data is detected by a proximity sensor, and in step S320, data is detected by an attitude sensor. In some embodiments, the proximity sensor can be set at a position nearby a voice output unit of the electronic device to detect a presence of an object. In some embodiments, the attitude sensor may be an accelerometer, a Gyro sensor, and/or any motion sensor, which can detect an attitude, such as altitude and angle of the electronic device. Then, in step S330, it is determined whether an object is detected by the proximity sensor and an attitude detected by the attitude sensor indicates that the electronic device generates a specific motion or the electronic device is in a specific attitude, such as a pose indicating a user substantially putting the electronic device nearby the ear at a specific time point, such as the time point at which the motion is terminated, according to the data detected by the proximity sensor and the data detected by the attitude sensor. Similarly, in some embodiments, data corresponding to the electronic device, such as a variation of a velocity, a displacement, and/or an angular acceleration detected by the attitude sensor in a predefined interval is received. In some embodiments, it is determined whether the data variation in the predefined interval conforms to a predefined pattern corresponding to the specific motion. When the data variation in the predefined interval conforms to the predefined pattern, it is determined that the electronic device generates the specific motion. If no object is detected by the proximity sensor or the attitude detected by the attitude sensor does not indicate that the electronic device generates a specific motion or the electronic device is in a specific attitude (No in step S330), the procedure returns to step S310. If an object is detected by the proximity sensor and the attitude detected by the attitude sensor does indicate that the electronic device generates a specific motion or the electronic device is in a specific attitude (Yes in step S330), in step S340, a voice playback process is performed. Similarly, in some embodiments, a group with at least one member can communicate with each other via voice messages. The electronic device of each member can receive voice messages generated by the electronic devices of other members. In some embodiments, the voice message generated by an electronic device of a member can be transmitted to a server via a network, and the server can transmit the voice message to the respective electronic devices of other members. In some embodiments, it is determined whether the electronic device has at least one voice message which has not been played yet in the group before step S340. If the electronic device has at least one voice message which has not been played yet in the group, the voice message playback process in step S340 is performed. It is understood that, in some embodiments, the at least one voice message which has not been played yet in the electronic device is played according to a time sequence, at which the voice message is generated or received, in the voice playback process. In some embodiments, when a voice message which has been played exists between two voice messages which has not been played yet, the voice message which has been played will be played again. It is understood that, in some embodiments, when no object is detected by the proximity sensor during the voice playback process, the voice playback process is terminated.

Then, in step S350, it is determined whether the voice playback process is completed. If the voice playback process is not completed (No in step S350), the procedure remains at step S340. If the voice playback process is completed (Yes in step S350), in step S360, a voice recording process is performed. It is noted that, the voice recording process is performed according to the sound received by a voice reception unit to generate a voice message. In some embodiments, it is determined whether an instruction corresponding to the termination of the voice recording process is received. In some embodiments, during the voice recording process, an instruction corresponding to the termination of the voice recording process can be generated when no object is detected by the proximity sensor. When an instruction corresponding to the termination of the voice recording process is received, the electronic device can transmit the voice message generated in the voice recording process to a server. Similarly, the server can notify other electronic devices of a group about the voice message.

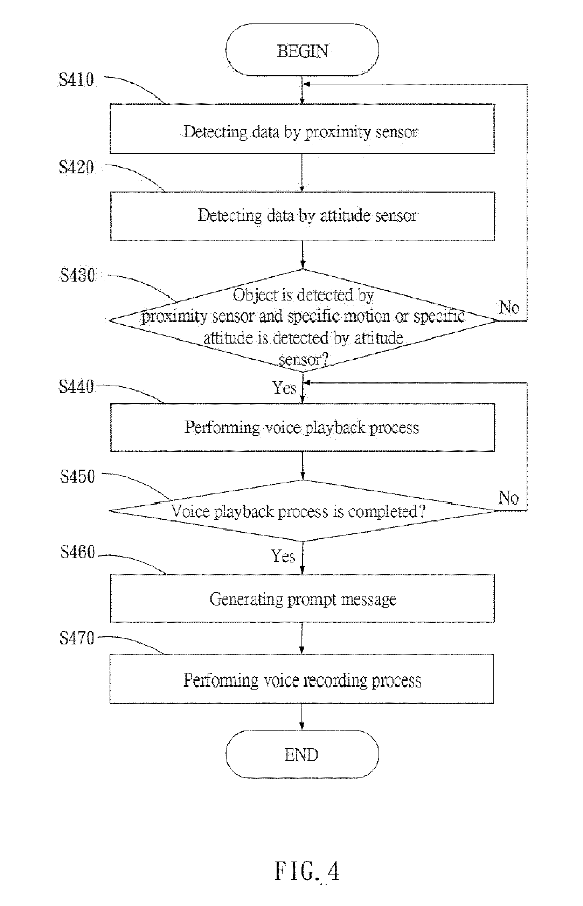

Fig. 4 is a flowchart of another embodiment of a method for voice management of the invention. The method for voice management can be used in an electronic device, such as a computer, or a mobile device, such as a mobile phone, a smartphone, a PDA, a GPS, or a notebook.

In step S410, data is detected by a proximity sensor, and in step S420, data is detected by an attitude sensor. In some embodiments, the proximity sensor can be set at a position nearby a voice output unit of the electronic device to detect a presence of an object. In some embodiments, the attitude sensor may be an accelerometer, a Gyro sensor, and/or any motion sensor, which can detect an attitude, such as altitude and angle of the electronic device. Then, in step S430, it is determined whether an object is detected by the proximity sensor and an attitude detected by the attitude sensor indicates that the electronic device generates a specific motion or the electronic device is in a specific attitude, such as a pose indicating a user substantially putting the electronic device nearby the ear at a specific time point, such as the time point at which the motion is terminated, according to the data detected by the proximity sensor and the data detected by the attitude sensor. Similarly, in some embodiments, data corresponding to the electronic device, such as a variation of a velocity, a displacement, and/or an angular acceleration detected by the attitude sensor in a predefined interval is received. In some embodiments, it is determined whether the data variation in the predefined interval conforms to a predefined pattern corresponding to the specific motion. When the data variation in the predefined interval conforms to the predefined pattern, it is determined that the electronic device generates the specific motion. If no object is detected by the proximity sensor or the attitude detected by the attitude sensor does not indicate that the electronic device generates a specific motion or the electronic device is in a specific attitude (No in step S430), the procedure returns to step S410. If an object is detected by the proximity sensor and the attitude detected by the attitude sensor does indicate that the electronic device generates a specific motion or the electronic device is in a specific attitude (Yes in step S430), in step S440, a voice playback process is performed. Similarly, in some embodiments, a group with at least one member can communicate with each other via voice messages. The electronic device of each member can receive voice messages generated by the electronic devices of other members. In some embodiments, the voice message generated by an electronic device of a member can be transmitted to a server via a network, and the server can transmit the voice message to the respective electronic devices of other members. In some embodiments, it is determined whether the electronic device has at least one voice message which has not been played yet in the group before step S440. If the electronic device has at least one voice message which has not been played yet in the group, the voice message playback process in step S440 is performed. It is understood that, in some embodiments, the at least one voice message which has not been played yet in the electronic device is played according to a time sequence, at which the voice message is generated or received, in the voice playback process. In some embodiments, when a voice message which has been played exists between two voice messages which has not been played yet, the voice message which has been played will be played again. It is understood that, in some embodiments, when no object is detected by the proximity sensor during the voice playback process, the voice playback process is terminated.

Then, in step S450, it is determined whether the voice playback process is completed. If the voice playback process is not completed (No in step S450), the procedure remains at step S440. If the voice playback process is completed (Yes in step S450), in step S460, a prompt message is generated. It is understood that, in some embodiments, the prompt message can comprise a display such as text or icon, a sound, and/or a vibration. It is noted that, the user of the electronic device can know a current status of the electronic device by informing with the prompt message. In other words, the electronic device will enter the voice recording process. After the prompt message is generated, in step S470, a voice recording process is performed. It is noted that, the voice recording process is performed according to the sound received by a voice reception unit to generate a voice message. In some embodiments, it is determined whether an instruction corresponding to the termination of the voice recording process is received. In some embodiments, during the voice recording process, an instruction corresponding to the termination of the voice recording process can be generated when no object is detected by the proximity sensor. When an instruction corresponding to the termination of the voice recording process is received, the electronic device can transmit the voice message generated in the voice recording process to a server. Similarly, the server can notify other electronic devices of a group about the voice message.

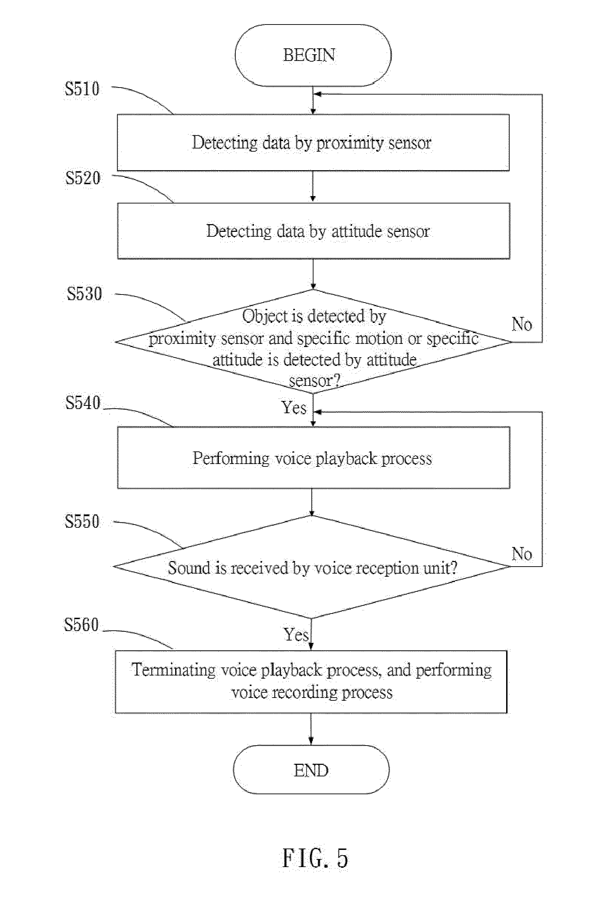

Fig. 5 is a flowchart of another embodiment of a method for voice management of the invention. The method for voice management can be used in an electronic device, such as a computer, or a mobile device, such as a mobile phone, a smartphone, a PDA, a GPS, or a notebook.

In step S510, data is detected by a proximity sensor, and in step S520, data is detected by an attitude sensor. In some embodiments, the proximity sensor can be set at a position nearby a voice output unit of the electronic device to detect a presence of an object. In some embodiments, the attitude sensor may be an accelerometer, a Gyro sensor, and/or any motion sensor, which can detect an attitude, such as altitude and angle of the electronic device. Then, in step S530, it is determined whether an object is detected by the proximity sensor and an attitude detected by the attitude sensor indicates that the electronic device generates a specific motion or the electronic device is in a specific attitude, such as a pose indicating a user substantially putting the electronic device nearby the ear at a specific time point, such as the time point at which the motion is terminated, according to the data detected by the proximity sensor and the data detected by the attitude sensor. Similarly, in some embodiments, data corresponding to the electronic device, such as a variation of a velocity, a displacement, and/or an angular acceleration detected by the attitude sensor in a predefined interval is received. In some embodiments, it is determined whether the data variation in the predefined interval conforms to a predefined pattern corresponding to the specific motion. When the data variation in the predefined interval conforms to the predefined pattern, it is determined that the electronic device generates the specific motion. If no object is detected by the proximity sensor or the attitude detected by the attitude sensor does not indicate that the electronic device generates a specific motion or the electronic device is in a specific attitude (No in step S530), the procedure returns to step S510. If an object is detected by the proximity sensor and the attitude detected by the attitude sensor does indicate that the electronic device generates a specific motion or the electronic device is in a specific attitude (Yes in step S530), in step S540, a voice playback process is performed. Similarly, in some embodiments, a group with at least one member can communicate with each other via voice messages. The electronic device of each member can receive voice messages generated by the electronic devices of other members. In some embodiments, the voice message generated by an electronic device of a member can be transmitted to a server via a network, and the server can transmit the voice message to the respective electronic devices of other members. In some embodiments, it is determined whether the electronic device has at least one voice message which has not been played yet in the group before step S540. If the electronic device has at least one voice message which has not been played yet in the group, the voice message playback process in step S540 is performed. It is understood that, in some embodiments, the at least one voice message which has not been played yet in the electronic device is played according to a time sequence, at which the voice message is generated or received, in the voice playback process. In some embodiments, when a voice message which has been played exists between two voice messages which has not been played yet, the voice message which has been played will be played again. It is understood that, in some embodiments, when no object is detected by the proximity sensor during the voice playback process, the voice playback process is terminated.

Then, in step S550, it is determined whether a sound is received by a voice reception unit. It is understood that, in some embodiments, the determination of whether a sound is received by the voice reception unit is performed by determining whether a volume of a sound received in a predefined time interval is greater than a specific threshold. If no sound is received by the voice reception unit (No in step S550), the procedure remains at step S540. If a sound is received by the voice reception unit (Yes in step S550), in step S560, a voice recording process is performed. It is noted that, the voice recording process is performed according to the sound received by a voice reception unit to generate a voice message. In some embodiments, it is determined whether an instruction corresponding to the termination of the voice recording process is received. In some embodiments, during the voice recording process, an instruction corresponding to the termination of the voice recording process can be generated when no object is detected by the proximity sensor. When an instruction corresponding to the termination of the voice recording process is received, the electronic device can transmit the voice message generated in the voice recording process to a server. Similarly, the server can notify other electronic devices of a group about the voice message. Similarly, in some embodiments, a prompt message can be generated before entering the voice recording process. It is understood that, in some embodiments, the prompt message can comprise a display such as text or icon, a sound, and/or a vibration. It is noted that, the user of the electronic device can know a current status of the electronic device by informing with the prompt message. In other words, the electronic device will enter the voice recording process.

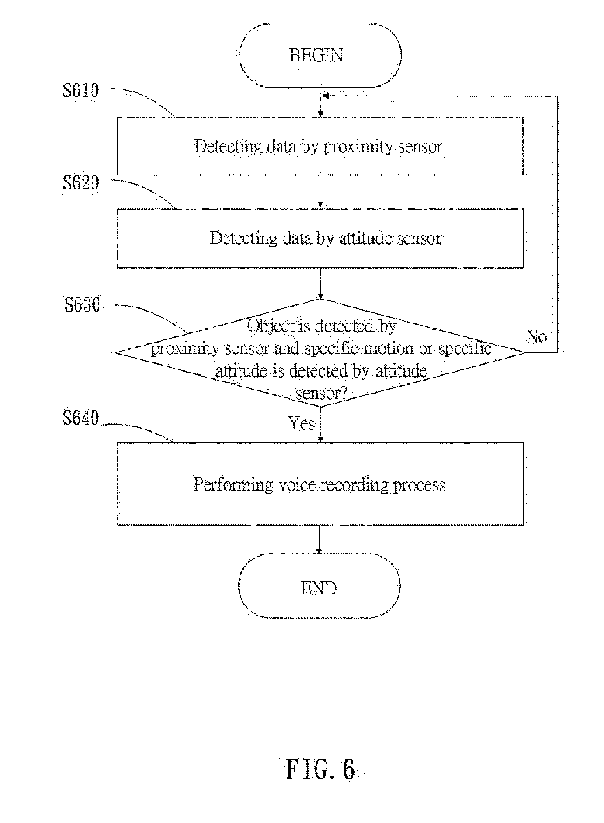

Fig. 6 is a flowchart of another embodiment of a method for voice management of the invention. The method for voice management can be used in an electronic device, such as a computer, or a mobile device, such as a mobile phone, a smartphone, a PDA, a GPS, or a notebook.

In step S610, data is detected by a proximity sensor, and in step S620, data is detected by an attitude sensor. In some embodiments, the proximity sensor can be set at a position nearby a voice output unit of the electronic device to detect a presence of an object. In some embodiments, the attitude sensor may be an accelerometer, a Gyro sensor, and/or any motion sensor, which can detect an attitude, such as altitude and angle of the electronic device. Then, in step S630, it is determined whether an object is detected by the proximity sensor and an attitude detected by the attitude sensor indicates that the electronic device generates a specific motion or the electronic device is in a specific attitude, such as a pose indicating a user substantially putting the electronic device nearby the ear at a specific time point, such as the time point at which the motion is terminated, according to the data detected by the proximity sensor and the data detected by the attitude sensor. Similarly, in some embodiments, data corresponding to the electronic device, such as a variation of a velocity, a displacement, and/or an angular acceleration detected by the attitude sensor in a predefined interval is received. In some embodiments, it is determined whether the data variation in the predefined interval conforms to a predefined pattern corresponding to the specific motion. When the data variation in the predefined interval conforms to the predefined pattern, it is determined that the electronic device generates the specific motion. If no object is detected by the proximity sensor or the attitude detected by the attitude sensor does not indicate that the electronic device generates a specific motion or the electronic device is in a specific attitude (No in step S630), the procedure returns to step S610. If an object is detected by the proximity sensor and the attitude detected by the attitude sensor does indicate that the electronic device generates a specific motion or the electronic device is in a specific attitude (Yes in step S630), in step S640, a voice recording process is performed. Similarly, the voice recording process is performed according to the sound received by a voice reception unit to generate a voice message. In some embodiments, it is determined whether an instruction corresponding to the termination of the voice recording process is received. In some embodiments, during the voice recording process, an instruction corresponding to the termination of the voice recording process can be generated when no object is detected by the proximity sensor. When an instruction corresponding to the termination of the voice recording process is received, the electronic device can transmit the voice message generated in the voice recording process to a server. Similarly, the server can notify other electronic devices of a group about the voice message. It is understood that, in some embodiments, the electronic device can perform a voice playback process after the voice recording process is completed. Similarly, at least one voice message which has not been played yet in the electronic device is played in the voice playback process.

In the present application, it is determined whether an electronic device generates a specific motion, such as a motion indicating a user lifting up the electronic device, and substantially putting the electronic device nearby the ear, and a voice playback process or a voice recording process is performed when the electronic device generates the specific motion. The voice management of the present application can be performed no matter a user, who holds the electronic device is standing or lying down.

Therefore, the methods and systems for voice management of the present invention can automatically perform voice management processes, such as voice playback process and/or voice recording process according to data detected by a proximity sensor and an attitude sensor, thereby increasing efficiency of voice management, and reducing waste of system resources of the electronic device.

Methods for voice management may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for voice management for use in an electronic device, comprising:
detecting data by a proximity sensor (110);
detecting data by an attitude sensor (120); and
performing a voice management process when the data detected by the proximity sensor (110) indicates that a presence of an object is detected, and the data detected by the attitude sensor (120) indicates that the electronic device generates a specific motion or the electronic device is in a specific attitude, wherein the voice management process comprises a voice playback process or a voice recording process.

2. The method of claim 1, wherein at least one voice message which has not been played yet in the electronic device is played in the voice playback process.

3. The method of claim 2, further comprising performing the voice playback process first, and performing the voice recording process after the voice playback process is completed.

4. The method of claim 3, further comprising generating a prompt message before the voice recording process is performed.

5. The method of claim 4, wherein the prompt message comprises a display, a sound, or a vibration.

6. The method of claim 1, further comprising:
determining whether a sound is received by a sound reception unit during the voice playback process; and
terminating the voice playback process and performing the voice recording process when a sound is received by the sound reception unit.

7. The method of claim 6, further comprising terminating the voice playback process when no object is detected by the proximity sensor (110).

8. A system (100) for voice management for use in an electronic device, comprising:
a proximity sensor (110);
an attitude sensor (120); and
a processing unit (150) performing a voice management process when data detected by the proximity sensor (110) indicates that a presence of an object is detected, and data detected by the attitude sensor (120) indicates that the electronic device generates a specific motion or the electronic device is in a specific attitude, wherein the voice management process comprises a voice playback process or a voice recording process.

9. A machine-readable storage medium comprising a computer program, which, when executed, causes a device to perform a method for voice management, wherein the method comprises:
detecting data by a proximity sensor (110);
detecting data by an attitude sensor (120); and
performing a voice management process when the data detected by the proximity sensor (110) indicates that a presence of an object is detected, and the data detected by the attitude sensor (120) indicates that the electronic device generates a specific motion or the electronic device is in a specific attitude, wherein the voice management process comprises a voice playback process or a voice recording process.
